# EUROPÄISCHE PATENTSCHRIFT

(11) **EP 2 678 796 B1**
(45) Veröffentlichungstag und Bekanntmachung des Hinweises auf die Patenterteilung: **19.08.2015**
(21) Anmeldenummer: 12711339.7
(22) Anmeldetag: 22.02.2012
(51) Int. Cl.: G06F 21/36, G06F 21/42, G06F 21/53, G06F 21/60, G06F 21/71, G06F 21/74

(54) **VERFAHREN ZUM DATENAUSTAUSCH IN EINER GESICHERTEN LAUFZEITUMGEBUNG**
METHOD FOR INTERCHANGING DATA IN A SECURE RUNTIME ENVIRONMENT
PROCÉDÉ D'ÉCHANGE DE DONNÉES DANS UN ENVIRONNEMENT D'EXÉCUTION SÉCURISÉ

(30) Priorität: 24.02.2011 DE 102011012227
(43) Veröffentlichungstag der Anmeldung: 01.01.2014
(73) Patentinhaber: Trustonic Limited, Cambridge CB1 2JD (GB)
(72) Erfinder: SPITZ, Stephan, 85757 Karlsfeld (DE)
(74) Vertreter: D Young & Co LLP
(86) Internationale Anmeldenummer: PCT/EP2012/000763
(87) Internationale Veröffentlichungsnummer: WO 2012/113545

(56) Entgegenhaltungen:
- WO-A1-00/43876
- WO-A2-01/75595
- US-A1- 2009 327 552

## Beschreibung

Die Erfindung betrifft ein Verfahren zum Datenaustausch zwischen einer gesicherten Laufzeitumgebung, in welcher eine Anzahl an sicheren Applikationen ausführbar ist, und einer unsicheren Umgebung einer Mikroprozessoreinheit, insbesondere in einem mobilen Endgerät.

Gesicherte Lauf Zeitumgebungen sind aus dem Stand der Technik bekannt und ermöglichen eine gegen Angriffe geschützte Ausführung von Programmen mit einer Mikroprozessoreinheit. Unter Mikroprozessoreinheit ist dabei die Gesamtheit der zur Programmausführung verwendeten Hardware zu verstehen, insbesondere der eigentliche Mikroprozessor sowie entsprechende flüchtige und nicht-flüchtige Speicher, welche bei der Programmausführung zur Ablage von Daten verwendet werden.

Um den Sicherheitsanforderungen, den Speicherbeschränkungen und Kommunikationsmechanismen von Mikroprozessoreinheiten mit gesicherten Laufzeitumgebungen gerecht zu werden, ist es erforderlich, eine Multitasking-Eigenschaft zu optimieren.

US 2009/0327552 beschreibt ein System und ein Verfahren zum Schreiben einer Nachricht, von einem Absender, in Blöcke eines Speicherraumes, wobei der Speicherraum von dem Absender und einem Empfänger der Nachricht geteilt wird, und Senden, durch den Absender, eines der Nachricht entsprechenden Interrupts.

WO 00/43876 beschreibt ein Gerät mit kleiner Stellfläche, welches mehrere Programme von voneinander unabhängigen Anbietern durch die Einschluss einer Kontextbarriere, welche die Ausführung der Programme isoliert, sicher ausführen kann. Der Zugang von einem Programm in ein anderes Programm über die Kontextbarriere kann unter kontrollierten Bedingungen mittels eines Einstiegspunktobjekts erreicht werden.

Es ist Aufgabe der vorliegenden Erfindung, ein Verfahren zum Datenaustausch zwischen einer gesicherten Laufzeitumgebung und einer unsicheren Umgebung einer Mikroprozessoreinheit anzugeben, welches eine verbesserte Multitasking-Eigenschaft ermöglicht. Eine weitere Aufgabe der Erfindung besteht darin, eine Mikroprozessoreinheit anzugeben, welche verbesserte Multitasking-Eigenschaften aufweist.

Diese Aufgaben werden gelöst durch ein Verfahren gemäss den Merkmalen des Patentanspruches 1 sowie eine Mikroprozessoreinheit gemäss den Merkmalen des Patentanspruches 11. Vorteilhafte Ausgestaltungen der Erfindung sind in den abhängigen Patentansprüchen angegeben.

Bei dem erfindungsgemässen Verfahren von Datenaustausch zwischen einer gesicherten Laufzeitumgebung, in welcher eine Anzahl an sicheren Applikationen ausführbar ist, und einer unsicheren Umgebung einer Mikroprozessoreinheit, insbesondere in einem mobilen Endgerät, erfolgt die Übertragung von Applikationsdaten und Steuerdaten über verschiedene Puffer. Die Puffer erfolgen unter Nutzung eines, von der gesicherten Laufzeitumgebung und der unsicheren Umgebung les- und/oder beschreibbaren, Speicherbereichs eines Speichers.

Hierdurch wird eine strikte Prozessisolierung ermöglicht, die das sichere Nachladen von Binär-Code ermöglicht. Weiterhin wird ein schnellerer Datenaustausch von Applikationen der unsicheren Umgebung mit Prozessen in der gesicherten Laufzeitumgebung ermöglicht.

Die Steuerdaten unterschiedlicher Art werden über unterschiedliche Puffer übertragen. Es ist es bevorzugt, wenn, die Umschaltung zwischen der gesicherten Laufzeitumgebung und der unsicheren Umgebung betreffende, Kontrolldaten über einen eigenen, sicheren Puffer übertragen werden. Anhand der Kontrolldaten kann ein Wechsel zwisehen gesicherter Laufzeitumgebung und unsicherer Umgebung erfolgen. Hierdurch können insbesondere schnelle Kontextwechselzeiten erzielt werden, wodurch sich eine gute Performance bei einem Taskwechsel zwischen Prozessen ergibt.

In einer weiteren zweckmässigen Ausgestaltung basiert die Übertragung der Applikationsdaten und der Steuerdaten sowie optional der Kontrolldaten auf einem ARM-Monitorcode, der in einer Monitor-Einheit implementiert ist, welche Schnittstellen zu der gesicherten Laufzeitumgebung und der unsicheren Umgebung aufweist.

Es ist weiter bevorzugt, wenn die Übertragung der Applikationsdaten und der Steuerdaten zwischen der gesicherten Laufzeitumgebung und einem Treiber der unsicheren Umgebung erfolgt. Zweckmässigerweise legt ein in der unsicheren Umgebung, insbesondere in einer Schnittstelle des Treibers für die Steuerdaten, implementierter Scheduler fest, welche der sicheren Applikationen in der gesicherten Lauf zeitumgebung zur Ausführung gebracht wird.

Der Speicherbereich wird vorzugsweise durch eine Kontrollnachricht initialisiert. Insbesondere ist hierbei vorgesehen, dass die über Steuernachrichten gesicherte Laufzeitumgebung über für diese bestimmte Daten in dem Speicherbereich benachrichtigt wird. Dabei werden die Steuerdaten vorzugsweise mit einem eindeutigen Sitzungs-Kennzeichner (Session-ID) versehen, anhand dem die gesicherte Lauf zeitumgebung die Steuernachricht einer der in der gesicherten Laufzeitumgebung ausgeführten Applikation zuordnen kann.

In einer weiteren vorteilhaften Ausgestaltung wird jedem in der gesicherten Laufzeitumgebung ablaufenden Prozess eine definierte, nicht überschreitbare Rechenzeit zugewiesen. Diese darf aus Sicherheitsgründen nicht überschritten werden. Hierdurch kann eine strikte Prozessisolierung erzielt werden.

Gemäss einer weiteren zweckmässigen Ausgestaltung weist der in der gesicherten Laufzeitumgebung ablaufende Prozess nachfolgende Threadstruktur auf: Kennzeichner (ID) des Threads; aktueller Zustand des Threads; lokaler Exception Handler der Thread; Priorität des Threads. Vorzugsweise weist ein jeweiliger Prozess nachfolgende Task-Struktur auf: Momentaner Zustand der Task; Task-Kennzeichner der Erzeuger-Task; externer Exception Handler der Task; Rechenzeitkontingent der Task; Anzahl der Threads, die die Task aktivieren oder bereitstellen kann; Priorität und Rechte der Task. Durch die beschriebenen Thread- und/ oder Task-Strukturen müssen bei einem Kontextwechsel keine großen Datenmengen umkopiert werden. Hierdurch lassen sich schnelle Kontextwechselzeiten erzielen.

Die Erfindung schafft weiterhin eine Mikroprozessoreinheit mit einer gesicherten Laufzeitumgebung und einer unsicheren Umgebung, welche derart ausgestaltet ist, dass zum Datenaustausch zwischen der gesicherten Laufzeitumgebung und der unsicheren Umgebung die Übertragung von Applikationsdaten und Steuerdaten über verschiedene Puffer erfolgt. Der Begriff der Mikroprozessoreinheit ist dabei wiederum weit zu verstehen und umfasst alle für die Ausführung des Datenaustauschs notwendigen Hardware-Komponenten, z.B. einen tragbaren Datenträger und insbesondere eine ChipKarte.

Die Erfindung betrifft darüber hinaus ein mobiles Endgerät, insbesondere ein Mobiltelefon, welches eine entsprechende Mikroprozessoreinheit beinhaltet.

Die Erfindung wird nachfolgend näher anhand von Ausführungsbeispielen in der Zeichnung erläutert. Es zeigen:
- Fig. 1: eine schematische Darstellung des erfindungsgemäßen Verfahrens,
- Fig. 2: eine schematische Darstellung der zur Verwirklichung des erfindungsgemäßen Verfahrens notwendigen Komponenten einer Mikroprozessoreinheit,
- Fig. 3: eine schematische Darstellung, anhand der die Funktionsweise des erfindungsgemäßen Verfahrens erläutert wird, und
- Fig. 4: eine schematische Darstellung eines Anwendungsbeispiels des erfindungsgemäßen Verfahrens.

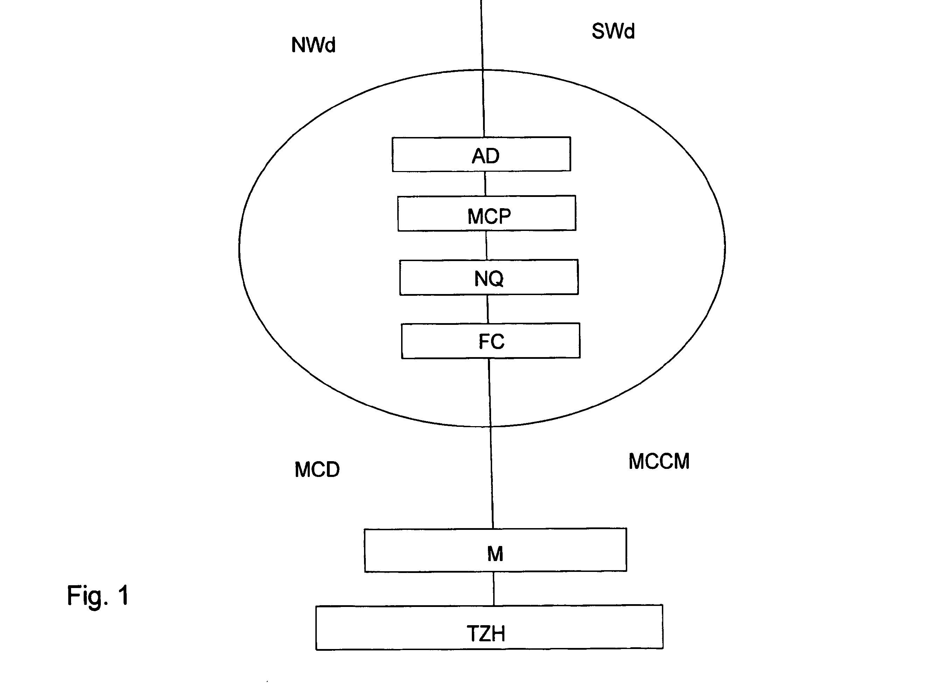

Anhand von Fig.1 wird der Datenaustausch zwischen einer gesicherten Laufzeitumgebung SWd und einer unsicheren Umgebung NWd einer Mikroprozessoreinheit beschrieben, welche in der Form einer sog. ARM-Trust-Zone ausgebildet ist. Die ARM-Trust-Zone stellt eine bekannte Technologie dar, mit der in einer Mikroprozessoreinheit ein geschützter Bereich generiert wird, der als gesicherte Laufzeitumgebung SWd zur Durchführung von als Trustlets bezeichneten Applikationen verwendet wird. Die gesicherte Laufzeitumgebung wird als "Secure World" bezeichnet, die unsichere Umgebung als "Normal World". In der hier beschriebenen Ausführungsform ist die ARM-Trust-Zone in einer Hardware-Plattform, der sog. Trust-Zone-Hardware, eines mobilen Endgerätes, bspw. einem Mobiltelefon, implementiert. Die Laufzeitumgebung stellt dabei eine Software-Schicht zwischen der Applikations- und der Betriebssystem-Schicht der Mikroprozessoreinheit dar.

Fig.1 zeigt schematisch eine solche Mikroprozessoreinheit mit einer gesicherten Laufzeitumgebung SWd mit einer Kommunikationseinheit MCCM, die als sog. MobiCore-Kommunikationsmodul ausgebildet ist. Die Kommunikationseinheit MCCM nutzt dabei das Betriebssystem MC (MobiCore) der gesicherten Laufzeitumgebung SWd. Ferner dargestellt ist die unsichere Umgebung NWd mit einem Treiber MCD, der als sog. MobiCore-Treiber ausgebildet ist. Als Betriebssystem wird Rich OS verwendet. Gesicherte Laufzeitumgebung SWd und unsichere Umgebung NWd sind in einer sog. Trust-Zone-Hardware TZH verwirklicht.

Für den Datenaustausch zwischen gesicherter Laufzeitumgebung SWd und unsicherer Umgebung NWd ist eine Monitoreinheit M vorgesehen. Die Übertragung von Applikationsdaten AD, Steuerdaten MCP (MobiCore Control Protocol Daten), Steuerdaten NQ (Notification Queue) und Kontrolldaten FC (sog. Fast Calls) erfolgt über jeweilige, verschiedene Puffer. Die Übertragung der Applikationsdaten AD, der Steuerdaten MCP und NQ sowie der Kontrolldaten FC basiert auf ARM-Monitorcode, der in der Monitoreinheit M implementiert ist, welche Schnittstellen zu der gesicherten Laufzeitumgebung SWd und der unsicheren Umgebung NWd aufweist.

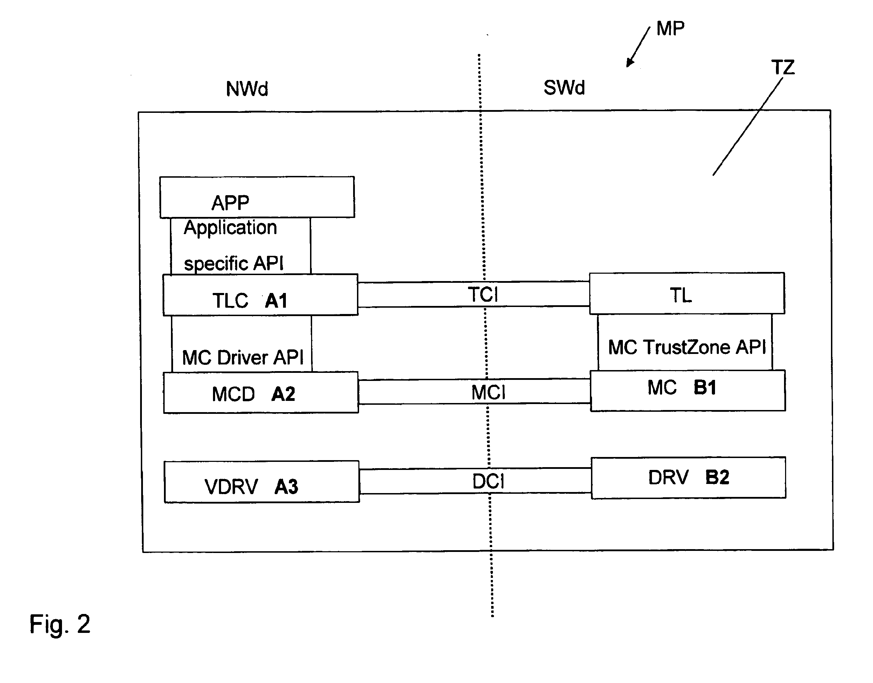

Fig. 2 zeigt die zur Verwirklichung des erfindungsgemäßen Verfahrens notwendigen Komponenten einer Mikroprozessoreinheit MP. Diese weist die bereits beschriebene gesicherte Laufzeitumgebung SWd und die unsichere Umgebung NWd auf. Die gesicherte Umgebung wird auch als Trust-Zone TZ bezeichnet. In dieser ist wenigstens ein als Trustlet TL bezeichnete Applikation enthalten. Über eine applikationsspezifische Schnittstelle (MC Trustlet API) kommuniziert diese mit einem Betriebssystem der gesicherten Laufzeitumgebung MC, bspw. MobiCore, (Block B1). Darüber hinaus sind Treiber DRV in der gesicherten Laufzeitumgebung SWd enthalten (Block B2).

In der unsicheren Umgebung, welches als Betriebssystem z.B. Rich OS nutzt, ist wenigstens eine Applikation APP vorgesehen, welche über eine anwendungsspezifische Schnittstelle (Application specific API) mit einem Applikationsverbinder TLC (sog. Trustlet Connector) im Block A1 Daten austauschen kann. Der Applikationsverbinder kann über eine Schnittstelle TCI mit einer Applikation TL in der gesicherten Laufzeitumgebung kommunizieren. In der unsicheren Umgebung NWd ist ferner in einem Block A2 ein Treiber MCD, bspw. ein MobiCore-Treiber, enthalten, dem eine applikationsspezifische Schnittstelle (MC-Driver API) zugeordnet ist. Darüber hinaus ist in einem Block A3 ein virtueller Treiber VDRV in der unsicheren Umgebung enthalten. Der MobiCore-Treiber MCD kann über eine Schnittstelle MCI mit dem Betriebssystem MC der gesicherten Laufzeitumgebung kommunizieren. Über eine Schnittstelle DCI ist eine Kommunikation zwischen dem virtuellen Treiber VDRV und dem Treiber DRV der gesicherten Laufzeitumgebung möglich.

Erfindungsgemäße Eigenschaften der Mikroprozessoreinheit sind ein ausgelagerter Prozess-Scheduler in der unsicheren Umgebung in dem MobiCore-Treiber MCD. In dem Betriebssystem der gesicherten Laufzeitumgebung, bspw. MobiCore, ist ein optimierter µKernel enthalten, welcher bspw. keine Inter-Prozess-Kommunikation umfasst. In MC erfolgt ein preemptives Multitasking mit Zeitkontingenten. Darüber hinaus umfasst MC einen optimierten Task-Kontext. Schließlich umfasst die Mikroprozessoreinheit ein mehrschichtiges Treiberkonzept in den Blöcken A1, A2, A3, welche optimiert auf eine asynchrone Kommunikation mit einer multitaskingfähigen Umgebung in B1 sind.

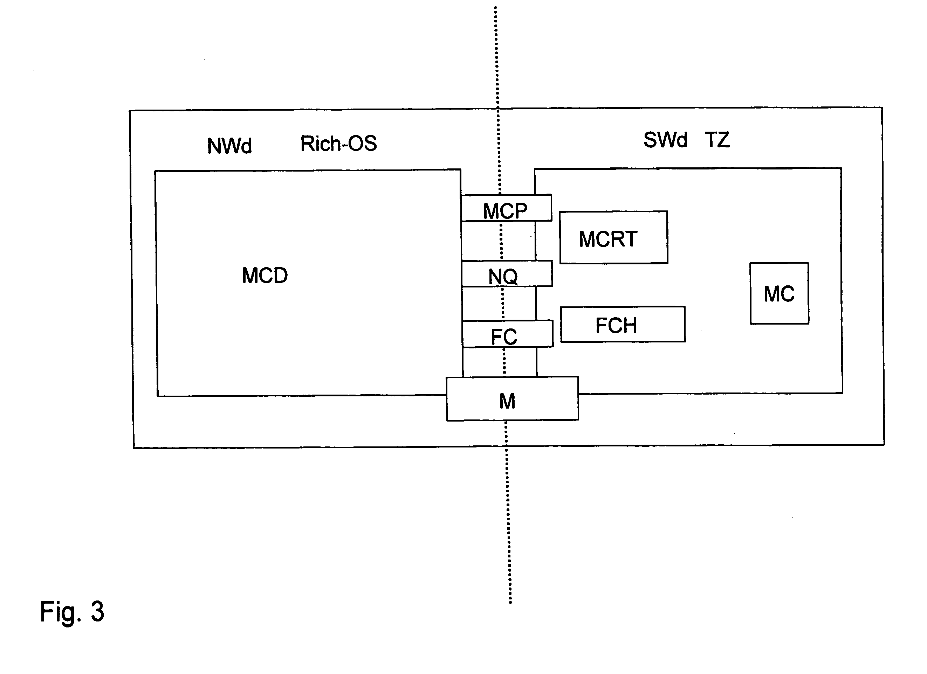

Das mehrschichtige Treiberkonzept wird nachfolgend näher anhand Fig. 3 erläutert. Der MobiCore-Treiber MCD (Block A2) ist, wie in Fig. 3 dargestellt, aufgebaut und umfasst drei Schnittstellen für die Übertragung von Steuerdaten MCP und NQ sowie Kontrolldaten FC zwischen der unsicheren Umgebung und der gesicherten Laufzeitumgebung SWd. In dem MobiCore-Betriebssystem (Block B1) sind ferner eine Laufzeitmanagementeinheit MCRT und ein Kontrolldaten-Handler FCH vorgesehen. Darüber hinaus ist die eingangs bereits erwähnte Monitoreinheit M zur Koordination des Datenaustauschs zwischen gesicherter Laufzeitumgebung SWd und unsicherer Umgebung NWd dargestellt.

Die der Übertragung der Steuerdaten MCP zugeordnete Schnittstelle ist für die Steuerung des MobiCore-Betriebssystems MC hauptverantwortlich. Hier wird entschieden, welche Tasks des Betriebssystems gestartet und gestoppt werden. Die von dem MobiCore-Betriebssystem gelieferten Daten werden auf richtige Formatierung überprüft. Für die Kommunikation wird ein spezieller Puffer in einem Speicher reserviert, der über eine Kontrollnachricht FC initialisiert wird. Der Speicher wird als World Shared Memory bezeichnet. Auf diesen kann sowohl von der unsicheren Umgebung NWd als auch von der gesicherten Laufzeitumgebung SWd zugegriffen werden.

Die der Übertragung der Steuerdaten NQ zugeordnete Schnittstelle ist dafür verantwortlich, mittels Nachrichten die Laufzeitmanagementeinheit MCRT zu informieren, dass Daten zur Abholung in dem Speicher bereit liegen. Diese Daten können von dem MobiCore-Treiber MCD stammen, d.h. zur Datenkommunikation zwischen einer Applikation der unsicheren Umgebung NWd mit einer bestimmten Applikation (Trustlet TL) der gesicherten Laufzeitumgebung SWd gehören. Im Falle einer Kommunikation auf der Schicht des MobiCore-Treibers MCD sind die Nachrichten mit einem Kennzeichner, einer sog. Session ID, versehen, anhand der das MobiCore-Betriebssystem MC die Nachricht eindeutig einer bestimmten Applikation TL der gesicherten Laufzeitumgebung SWd zuordnen kann.

Ebenso können Steuerdaten aus der Schicht der Steuerdaten MCP im Puffer der Steuerdaten NQ sein. In beiden Fällen informiert die NQ zugeordnete Schnittstelle über das Auslösen eines speziellen Interrupts (vorzugsweise ein spezieller Trust-Zone-Interrupt SIQ) die Laufzeitmanagement-Einheit MCRP über bereitgestellte Daten.

Über die den Kontrolldaten FC zugeordnete Schnittstelle findet der eigentliche Wechsel zwischen der unsicheren Umgebung NWd und der gesicherten Laufzeitumgebung SWd statt. Hierzu gibt es drei Möglichkeiten, wie mit der Monitoreinheit M interagiert werden kann. Über sog. Fast Calls, N-SIQ-Nachrichten oder NQ-IRQ-Nachrichten. Letztere werden als Notification IRQ bezeichnet. Die beiden ersten schalten lediglich von der unsicheren Umgebung in die gesicherte Laufzeitumgebung um. Im Fall von NQ-IRQs ist auch eine Umschaltung in umgekehrter Richtung möglich.

Die Aufgabe des Schedulers übernimmt die den Steuerdaten MCP zugeordnete Schnittstelle im MobiCore-Treiber MCD der unsicheren Umgebung. Der Treiber entscheidet, welche MobiCore-Task zur Ausführung gebracht wird.

Das beschriebene Konzept ermöglicht Optimierungen im µKernel-Ansatz. Im Vergleich zu klassischen µKernel-Ansätzen ist im MobiCore-Betriebssystem MC keine Interprozesskommunikation IPC implementiert. MobiCore-Prozesse können dennoch Daten austauschen über einen gemeinsam benutzten Speicher (World Shared Memory). MobiCore-Prozessen wird darüber hinaus eine bestimmte Rechenzeit zugewiesen, die aus Sicherheitsgründen nicht überschritten werden kann.

Ein MobiCore-Prozess besitzt einfache Threads- bzw. Task-Strukturen. Hierdurch müssen bei einem Kontextwechsel keine großen Datenmengen kopiert werden. Dadurch ergeben sich schnelle Kontextwechselseiten.

Die Thread-Struktur ist wie folgt: ID des Threads, aktueller Zustand des Threads, lokaler Exception Handler der Threads, Priorität des Threads. Die Task-Struktur ist wie folgt: Momentaner Zustand der Task, Task ID der Erzeuger-Task, externer Exception Handler der Task, Rechenzeitkontingent der Task, Anzahl der Threads, die die Task aktivieren oder spenden kann, Priorität und Rechte der Task.

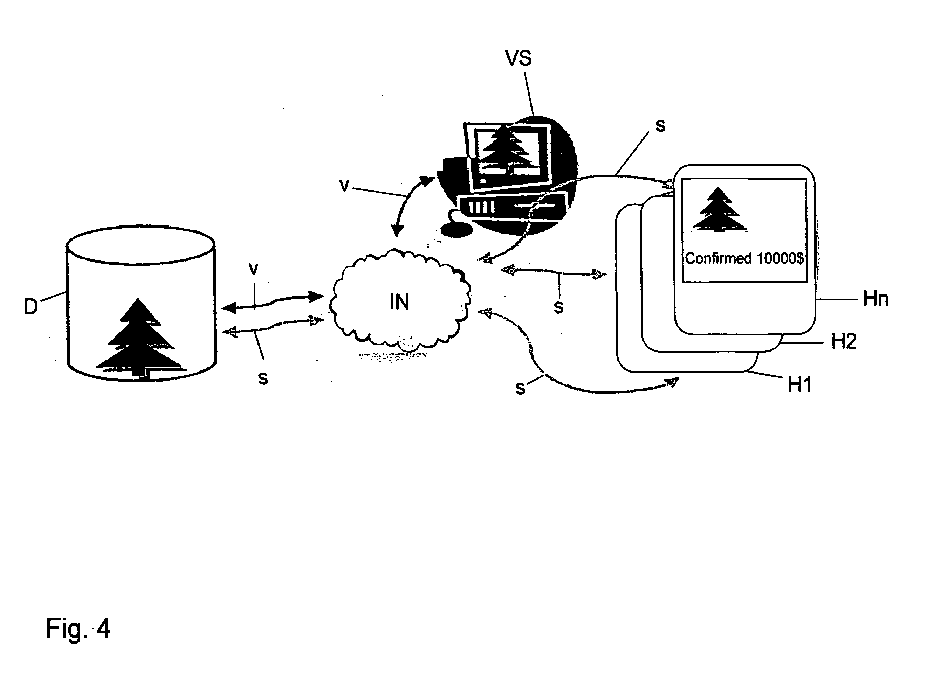

Die Übertragung von Applikationsdaten, Steuerdaten und Kontrolldaten über verschiedene Puffer kann für die in Fig. 4 dargestellte Anwendung genutzt werden.

Eine Applikation in einem sicheren Bereich eines mobilen Telefons H1, H2, ..., Hn kommuniziert mit einem zentralen Hintergrundsystem (Datenbank D) und bekommt von dort eine Information zur Darstellung im Display des Sicherheitsmodus übermittelt. Die darzustellende Information kann bspw. eine Zahlenkolonne, ein Bild, ein Logo usw. sein. In regelmäßigen Abständen modifiziert das Hintergrundsystem D die im Sicherheitsmodus darzustellende Information. Die darzustellende Information wird zusätzlich einem breiten Nutzerkreis zeitgleich öffentlich bekannt gegeben. Der Anwender des Endgeräts H1, H2, ..., Hn, das eine sichere Anzeigevorrichtung umfasst, kann über einen zweiten Kommunikationskanal die aktuell gültige Information überprüfen. Der zweite Kommunikationskanal kann bspw. ein Internetfähiger Rechner, der Browser des Mobiltelefons, das eine Web-Verbindung aus der sicheren Welt umfasst, eine Tageszeitung usw. sein.

Hiermit steht nicht der Schutz von sicherheitskritischen Daten, z.B. kryptografische Schlüssel, im Vordergrund. Stattdessen ist hier die Nutzerwahrnehmung eines sicheren Displays oder eines sicheren Eingabemittels von Bedeutung. Hierdurch kann das Vertrauen von Endanwendern in mobile Endgeräte, bspw. für mobile Bankanwendungen oder Zahlungsanwendungen, erhöht werden.

Hierzu sind in dem Datenbanksystem D Informationen hinterlegt, die in den Endgeräten H1, H2, ..., Hn mittels eines in den Endgeräten implementierten Aktualisierungs-Servers über einen Aktualisierungs-Client der Datenbank ausgewechselt werden. Die Information ist in Fig. 4 beispielhaft ein Weihnachtsbaum. Dieselbe Information wird auch über einen in dem Datenbanksystem integrierten Web-Server öffentlich beliebigen Systemen zur Verifikation VS über einen öffentlichen Kanal v zugänglich gemacht. Der Ablauf der Aktualisierung der Information ist wie folgt:
1. Der Update-Server kontaktiert über einen sicheren Kanal s alle in der Datenbank D gelisteten mobilen Endgeräte H1, H2, ..., Hn, um eine neue Information zu verschicken. Dies bedeutet, in regelmäßigen Abständen modifiziert das Hintergrundsystem die im Sicherheitsmodus des mobilen Endgeräts H1, H2, ..., Hn darzustellende Information.
2. Um eine erfolgreiche Aktualisierung durchzuführen, muss der Aktualisierungs-Client sich bei dem Aktualisierungs-Server in dem Endgerät authentisieren. Dies kann bspw. mit einem Client-Zertifikat erfolgen. Ebenso muss auch der Aktualisierungs-Server des Endgeräts beim Aktualisierungs-Client der Datenbank nachweisen, dass der richtige Server für die Aktualisierung kontaktiert wurde. Dies kann mittels eines Server-Zertifikats erfolgen.
3. Nach der erfolgreichen gegenseitigen Authentisierung wird über den gesicherten Kanal s zwischen dem Aktualisierungs-Server der Handgeräte und dem Aktualisierungs-Client der Datenbank die neue Information (hier: Weihnachtsbaum) in das Endgerät in einem nur dem Sicherheitsmodus zugänglichen Bereich eingespielt.
4. Optional ist die Information mit einem digitalen Wasserzeichen geschützt und für jedes Endgerät personalisiert.
5. Die Personalisierung kann bspw. in der gesicherten Laufzeitumgebung überprüft werden. Falls sie nicht für das Endgerät passend ist, werden bestimmte Funktionalitäten der gesicherten Laufzeitumgebung blockiert. Dies hat bspw. zur Folge, dass keine mobilen Zahlvorgänge möglich sind.

Der Ablauf der Verifikation durch den Endanwender ist wie folgt:
1. Der Endanwender führt eine Aktion durch, die das mobile Endgerät H1, H2, ..., Hn in einen Sicherheitsmodus schaltet.
2. Das betreffende mobile Endgerät zeigt nun an einer bestimmten Stelle im sicheren Bildschirm eine beliebige Information, hier den Weihnachtsbaum, an.
3. Der Anwender des Endgeräts kann nun über einen zweiten, parallelen Kanal überprüfen, ob die Information auf seinem mobilen Endgerät mit der anderweitig veröffentlichten Information überein stimmt.

Hierdurch wird das Vertrauen des Endanwenders in ein Mobiltelefon, speziell für Bezahl- und Bankanwendungen, erhöht. Angriffe, die einen Sicherheitszustand eines elektronischen Endgeräts vortäuschen, werden deutlich erschwert. Der Benutzer wird in die Lage versetzt, zu überprüfen, ob sich das mobile Gerät im Sicherheitsmodus befindet. Hierdurch wird ein höheres Vertrauen des Anwenders in die oben genannten Applikationen geschaffen.

## Patentansprüche

1. Verfahren zum Datenaustausch zwischen einer gesicherten Laufzeitumgebung (SWd), in welcher eine Anzahl an sicheren Applikationen (TL) ausführbar ist, und einer unsicheren Umgebung (NWd) einer Mikroprozessoreinheit (MP), insbesondere in einem mobilen Endgerät, **dadurch gekennzeichnet dass** die Übertragung von Applikationsdaten (AD) und Steuerdaten (MCP, NQ) über verschiedene Puffer erfolgt, wobei die Steuerdaten (MCP, NQ) unterschiedlicher Art über unterschiedliche Puffer übertragen werden, und die Puffer unter Nutzung eines von der gesicherten Laufzeitumgebung (SWd) und der unsicheren Umgebung (NWd) les- und/oder beschreibbaren, Speicherbereichs eines Speichers (WSM) erfolgen.

2. Verfahren nach Anspruch 1, **dadurch gekennzeichnet, dass**, die Umschaltung zwischen der gesicherten Laufzeitumgebung (SWd) und der unsicheren Umgebung (NWd) betreffende, Kontrolldaten (FC) über einen eigenen sicheren Puffer übertragen werden.

3. Verfahren nach einem der vorhergehenden Ansprüche, **dadurch gekennzeichnet, dass** die Übertragung der Applikationsdaten (AD) und der Steuerdaten (MCP, NQ) sowie optional der Kontrolldaten (FC) auf einem ARM Monitorcode basiert, der in einer Monitoreinheit (M) implementiert ist, welche Schnittstellen zur der gesicherten Laufzeitumgebung (SWd) und der unsicheren Umgebung (NWd) aufweist.

4. Verfahren nach einem der vorhergehenden Ansprüche, **dadurch gekennzeichnet, dass** die Übertragung der Applikationsdaten (AD) und der Steuerdaten (MCP, NQ) zwischen der gesicherten Laufzeitumgebung (SWd) und einem Treiber (MCD) der unsicheren Umgebung (NWd) erfolgt.

5. Verfahren nach Anspruch 4, **dadurch gekennzeichnet, dass** ein in der unsicheren Umgebung (NWd), insbesondere in einer Schnittstelle des Treibers (MCD) für die Steuerdaten (MCP), implementierter Scheduler festlegt, welche der sicheren Applikationen (TL) in der gesicherten Lauf zeitumgebung (SWd) zur Ausführung gebracht wird.

6. Verfahren nach Anspruch 1, **dadurch gekennzeichnet, dass** über Steuernachrichten die gesicherte Laufzeitumgebung über für diese bestimmte Daten in dem Speicherbereich benachrichtigt wird.

7. Verfahren nach Anspruch 6, **dadurch gekennzeichnet, dass** die Steuernachrichten mit einem eindeutigen Sitzungs-Kennzeichner versehen werden, anhand dem die gesicherte Laufzeitumgebung (SWd) die Steuernachricht einer der in der gesicherten Laufzeitumgebung (SWd) ausgeführten Applikationen (TL) zuordnen kann.

8. Verfahren nach einem der vorhergehenden Ansprüche, **dadurch gekennzeichnet, dass** jedem in der gesicherten Lauf zeitumgebung (SWd) ablaufenden Prozess eine definierte, nicht überschreitbare Rechenzeit zugewiesen wird.

9. Verfahren nach Anspruch 8, **dadurch gekennzeichnet, dass** ein jeweiliger Prozess nachfolgende Threadstruktur aufweist: Kennzeichner (ID) des Threads; Aktueller Zustand des Threads; Lokaler Exception Handler der Threads; Priorität des Threads.

10. Verfahren nach Anspruch 8, **dadurch gekennzeichnet, dass** ein jeweiliger Prozess nachfolgende Taskstruktur aufweist: Momentaner Zustand der Task; Task-Kennzeichner der Erzeuger-Task; Externer Exception Handler der Task; Rechenzeitkontingent der Task; Anzahl der Threads, die die Task aktivieren oder bereitstellen kann; Priorität und Rechte der Task.

11. Mikroprozessoreinheit mit einer gesicherten Laufzeitumgebung (SWd) und einer unsicheren Umgebung (NWd), **dadurch gekennzeichnet dass** zum Datenaustausch zwischen der gesicherten Laufzeitumgebung (SWd) und der unsicheren Umgebung (NWd) die Übertragung von Applikationsdaten (AD) und Steuerdaten (MCP, NQ, FC) über verschiedene Puffer erfolgt, wobei die Steuerdaten (MCP, NQ) unterschiedlicher Art über unterschiedliche Puffer übertragen werden, und die Puffer unter Nutzung eines von der gesicherten Laufzeitumgebung (SWd) und der unsicheren Umgebung (NWd) les- und/oder beschreibbaren, Speicherbereichs eines Speichers (WSM) erfolgen.

12. Mikroprozessoreinheit nach Anspruch 11, **dadurch gekennzeichnet, dass** diese derart ausgestaltet ist, dass durch diese ein Verfahren nach einem der Ansprüche 2 bis 10 ausführbar ist.

13. Mobiles Endgerät, umfassend eine Mikroprozessoreinheit nach Anspruch 11 oder 12.

## Claims

1. Method for interchanging data between a secure runtime environment (SWd), in which a number of secure applications (TL) can be executed, and a non-secure environment (NWd) of a microprocessor unit (MP), in particular in a mobile terminal, **characterized in that** application data (AD) and control data (MCP, NQ) are transmitted using different buffers, different types of control data (MCP, NQ) being transmitted using different buffers, and the buffers being effected using a memory area of a memory (WSM) which can be read and/or written to by the secure runtime environment (SWd) and the non-secure environment (NWd).

2. Method according to Claim 1, **characterized in that** monitoring data (FC) relating to the changeover between the secure runtime environment (SWd) and the non-secure environment (NWd) are transmitted using a separate secure buffer.

3. Method according to one of the preceding claims, **characterized in that** the transmission of the application data (AD) and the control data (MCP, NQ) and optionally the monitoring data (FC) is based on an ARM monitor code which is implemented in a monitor unit (M) having interfaces to the secure runtime environment (SWd) and the non-secure environment (NWd).

4. Method according to one of the preceding claims, **characterized in that** the application data (AD) and the control data (MCP, NQ) are transmitted between the secure runtime environment (SWd) and a driver (MCD) of the non-secure environment (NWd).

5. Method according to Claim 4, **characterized in that** a scheduler implemented in the non-secure environment (NWd), in particular in an interface of the driver (MCD) for the control data (MCP), stipulates which of the secure applications (TL) is executed in the secure runtime environment (SWd).

6. Method according to Claim 1, **characterized in that** control messages are used to inform the secure runtime environment of data intended for it in the memory area.

7. Method according to Claim 6, **characterized in that** the control messages are provided with a unique session qualifier which can be used by the secure runtime environment (SWd) to assign the control message to one of the applications (TL) executed in the secure runtime environment (SWd).

8. Method according to one of the preceding claims, **characterized in that** a defined computing time which cannot be exceeded is allocated to each process running in the secure runtime environment (SWd).

9. Method according to Claim 8, **characterized in that** a respective process has the following thread structure: qualifier (ID) of the thread; current status of the thread; local exception handler of the threads; priority of the thread.

10. Method according to Claim 8, **characterized in that** a respective process has the following task structure: instantaneous status of the task; task qualifier of the generator task; external exception handler of the task; computing time contingent of the task; number of threads which can be activated or provided by the task; priority and rights of the task.

11. Microprocessor unit having a secure runtime environment (SWd) and a non-secure environment (NWd), **characterized in that**, in order to interchange data between the secure runtime environment (SWd) and the non-secure environment (NWd), application data (AD) and control data (MCP, NQ, FC) are transmitted using different buffers, different types of control data (MCP, NQ) being transmitted using different buffers, and the buffers being effected using a memory area of a memory (WSM) which can be read and/or written to by the secure runtime environment (SWd) and the non-secure environment (NWd).

12. Microprocessor unit according to Claim 11, **characterized in that** it is configured in such a manner that it can be used to carry out a method according to one of Claims 2 to 10.

13. Mobile terminal comprising a microprocessor unit according to Claim 11 or 12.

## Revendications

1. Procédé d'échange de données entre un environnement d'exécution sécurisé (SWd) dans lequel un certain nombre d'applications sécurisées (TL) sont exécutables, et un environnement non sécurisé (NWd) d'une unité à microprocesseur (MP), notamment dans un terminal mobile, **caractérisé en ce que** la transmission de données d'application (AD) et de données de commande (MCP, NQ) s'effectue par l'intermédiaire de divers tampons, dans lequel les données de commande (MCP, NQ) de types différents sont transmises par l'intermédiaire de tampons différents, et les tampons résultent de l'utilisation d'une zone de mémoire d'une mémoire (WSM) pouvant être lue et/ou écrite par l'environnement d'exécution sécurisé (SWd) et l'environnement non sécurisé (NWd).

2. Procédé selon la revendication 1, **caractérisé en ce que** des données de contrôle (FC) concernant le basculement entre l'environnement d'exécution sécurisé (SWd) et l'environnement non sécurisé (NWd) sont transmises par l'intermédiaire d'un tampon sécurisé indépendant.

3. Procédé selon l'une quelconque des revendications précédentes, **caractérisé en ce que** la transmission des données d'application (AD) et des données de commande (MCP, NQ) et, facultativement, des données de contrôle (FC) a pour base un code moniteur ARM qui est mis en oeuvre dans une unité de surveillance (M) qui présente des interfaces avec l'environnement d'exécution sécurisé (SWd) et l'environnement non sécurisé (NWd).

4. Procédé selon l'une quelconque des revendications précédentes, **caractérisé en ce que** la transmission des données d'application (AD) et des données de commande (MCP, NQ) s'effectue entre l'environnement d'exécution sécurisé (SWd) et un pilote (MCD) de l'environnement non sécurisé (NWd).

5. Procédé selon la revendication 4, **caractérisé en ce qu'**un ordonnanceur mis en oeuvre dans l'environnement non sécurisé (NWd), notamment dans une interface du pilote (MCD) destiné aux données de commande (MCP), détermine celles des applications sécurisées (TL) qui sont amenées à être exécutées dans l'environnement d'exécution sécurisé (SWd).

6. Procédé selon la revendication 1, **caractérisé en ce que** l'environnement sécurisé est averti desdites données déterminées pour celui-ci dans la zone de mémoire par l'intermédiaire de messages de commande.

7. Procédé selon la revendication 6, **caractérisé en ce que** les messages de commande sont dotés d'un identifiant de session unique au moyen duquel l'environnement d'exécution sécurisé (SWd) peut associer le message de commande à l'une des applications (TL) exécutées dans l'environnement d'exécution sécurisé (SWd).

8. Procédé selon l'une quelconque des revendications précédentes, **caractérisé en ce qu'**à chaque processus s'exécutant dans l'environnement d'exécution sécurisé (SWd) est affecté un temps de calcul défini ne pouvant pas être dépassé.

9. Procédé selon la revendication 8, **caractérisé en ce qu'**un processus respectif présente la structure de fil suivante : identifiant (ID) du fil ; état instantané du fil ; gestionnaire d'exception local du fil ; priorité du fil.

10. Procédé selon la revendication 8, **caractérisé en ce qu'**un processus respectif présente la structure de tâche suivante : état instantané de la tâche ; identifiant de tâche de la tâche génératrice ; gestionnaire d'exception externe de la tâche ; quota de temps de calcul de la tâche ; nombre des fils qui peuvent activer ou fournir la tâche ; priorité et droits de la tâche.

11. Unité à microprocesseur comportant un environnement d'exécution sécurisé (SWd) et un environnement non sécurisé (NWd), **caractérisé en ce que** la transmission de données d'application (AD) et de données de commande (MCP, NQ, SC) s'effectue par l'intermédiaire de divers tampons pour l'échange de données entre l'environnement d'exécution sécurisé (SWd) et l'environnement non sécurisé (NWd), dans lequel les données de commande (MCP, NQ) de types différents sont transmises par l'intermédiaire de tampons différents, et dans lequel les tampons résultent de l'utilisation d'une zone de mémoire d'une mémoire (WSM) pouvant être lue et/ou écrite par l'environnement d'exécution sécurisé (SWd) et l'environnement non sécurisé (NWd).

12. Unité à microprocesseur selon la revendication 11, **caractérisée en ce qu'**elle est conçue de manière à ce qu'un procédé selon l'une quelconque des revendications 2 à 10 puisse être mis en oeuvre par l'intermédiaire de celle-ci.

13. Terminal mobile comprenant une unité à microprocesseur selon la revendication 11 ou 12.
